# EUROPEAN PATENT SPECIFICATION

(11) **EP 2 957 370 B1**
(45) Date of publication and mention of the grant of the patent: **13.12.2017**
(21) Application number: 14751482.2
(22) Date of filing: 14.02.2014
(51) Int. Cl.: B23B 45/00, B25H 1/00, B23B 47/26

(54) **DRILLING MACHINE**
BOHRMASCHINE
PERCEUSE

(30) Priority: 15.02.2013 JP 2013028270
(43) Date of publication of application: 23.12.2015
(73) Proprietor: Nitto Kohki Co., Ltd., Tokyo 146-8555 (JP)
(72) Inventor: YOKOYAMA, Toshiki, Tokyo 146-8555 (JP); OHTSUKA, Kenji, Tokyo 146-8555 (JP)
(74) Representative: Carstens, Dirk Wilhelm
(86) International application number: PCT/JP2014/053496
(87) International publication number: WO 2014/126206

(56) References cited:
- GB-A- 2 311 028
- US-A- 3 837 757
- US-A- 5 415 503
- US-A- 5 415 503

## Description

### Technical Field:

The present invention relates to drilling machines. More particularly, the present invention relates to a drilling machine having a lead wire routed from a motor provided in a drilling drive unit vertically movable relative to a body unit to a drive control circuit disposed in the body unit.

### Background Art:

A drilling machine generally has a body unit having a power supply circuit and a drive control circuit therein, and a drilling drive unit vertically movably attached to the body unit. The drilling machine has a drilling tool fitting part at the bottom of the drilling drive unit to fit a drilling tool such as a drill or an annular cutter, and a motor at the top of the drilling drive unit to rotationally drive a drilling tool fitted to the drilling tool fitting part. In addition, a lead wire for transmitting electric power and control signals to the motor is routed from the motor to the drive control circuit in the body unit. When the drilling drive unit vertically moves relative to the body unit, the motor also vertically moves relative to the body unit, causing a change in the distance and route from the motor to the drive control circuit. Therefore, the lead wire routed from the motor is bent with a certain margin for absorbing such a change in the distance and route, thereby avoiding interference with the vertical movement of the motor.

In many of conventional drilling machines, as disclosed in Patent Literature 1, the lead wire extending between the body unit and the drilling drive unit is routed so as to run outside the drilling machine concerned. Accordingly, the lead wire may be caught on something, or a worker may grip the lead wire to carry the drilling machine, causing a large load to be applied to the lead wire, which may result in disconnection of the lead wire.

In contrast, there has been developed a drilling machine having a lead wire routed so as not to be exposed to the outside, as disclosed in Patent Literature 2. In drilling machine, the lead wire is routed so that a portion of the lead wire that exits the drilling drive unit and enters the body unit is curved in a relatively narrow space between the drilling drive unit and the body unit. By allowing the lead wire to bend curvedly, the drilling machine permits a change in the distance from the motor to the drive control circuit due to the vertical movement of the drilling drive unit. However, because the curved portion of the lead wire is formed in a narrow space between the body unit and the drilling drive unit, the curved portion has a small radius of curvature, and the curvature of the curved portion varies considerably when the drilling drive unit is vertically moved. Repeating the vertical movement of the drilling drive unit under such conditions causes a large stress to be repeatedly applied to the lead wire, resulting in the accumulation of fatigue, which may cause disconnection of the lead wire.

### Citation List:

### Patent Literature:

Patent Literature 1: United States Patent No. 5,342,153
Patent Literature 2: United States Patent No. 5,415,503

Closest prior art document GB 2 311 028 A discloses a portable drilling machine comprising an electromagnetic base from which a column extends perpendicularly. An electric power drill is slidably disposed on the column by means of a slide. An electrical cable extends between a terminal block on the column to a terminal box on the drill. An intermediate portion of the cable is formed into a loop located between the power drill and the column and is protected with an articulated plastics cable carrier which restricts the minimum radius into which the looped portion can be bent, thereby reducing the likelihood of damage to the cable as the power drill is moved and removing the necessity for the power cable to extend externally from the column to the power drill which could otherwise be incorrectly used to handle the machine.

### Summary of Invention:

Accordingly, an object of the present invention is to solve the above-described problem of the conventional technique and to provide a drilling machine having a lead wire routed so that the curved portion of the lead wire is not exposed to the outside and that the load on the lead wire is reduced.

This and under objects are solved by a drilling machine having the features as set forth in claim 1. Preferred embodiments of the drilling machine are stated in the claims 2 to 9.

### Solution to Problem:

The present invention provides a drilling machine including a body unit having a drive control circuit therein, and a drilling drive unit having a motor for rotationally driving a drilling tool. The drilling drive unit is vertically movably attached to the body unit. The drilling machine further includes a lead wire extending from the motor to the drive control circuit. The drilling machine has a lead wire passage formed between the body unit and the drilling drive unit to allow the lead wire to run therethrough in a vertical direction. The body unit has a lead wire housing part communicating with the lead wire passage, and a holding part holding a part of the lead wire in the body unit, the lead wire housing part being inside the body unit. The lead wire is routed to extend from the motor downward into the lead wire housing part through the lead wire passage and curved and directed upward in the lead wire housing part to lead to the drive control circuit, with an upwardly directed portion of the lead wire held by the holding part. When the drilling drive unit moves upward relative to the body unit, a part of the lead wire is paid out upward from the lead wire housing part into the lead wire passage, and the curved portion of the lead wire moves upward in the lead wire housing part, whereas, when the drilling drive unit moves downward relative to the body unit, a part of the lead wire is paid out downward from the lead wire passage into the lead wire housing part, and the curved portion moves downward in the lead wire housing part.

In this drilling machine, the lead wire extending from the motor in the vertically movable drilling drive unit extends straight downward between the body unit and the drilling drive unit and further extends into the lead wire housing part provided in the body unit, and the lead wire forms an upwardly directed curved portion in the lead wire housing part. Because the curved portion is formed not between the body unit and the drilling drive unit but in the body unit, the curved portion can have an increased radius of curvature. Accordingly, the change in curvature occurring at the curved portion when the drilling drive unit vertically moves can be reduced considerably as compared to the conventional drilling machines. Thus, it is possible to considerably reduce the problems associated with the above-described conventional machines, such as disconnection of the lead wire.

Specifically, the arrangement may be as follows. The lead wire passage has a first lead wire passage groove formed on a surface of the body unit facing the drilling drive unit, the first lead wire passage groove extending in the vertical direction. The first lead wire passage groove allows the lead wire to extend downward into the lead wire housing part.

More specifically, the drilling machine may further include a slide base part secured to the body unit and having a base part sliding surface and a base part facing surface, and a slider part secured to the drilling drive unit and having a slider part sliding surface slidable relative to the base part sliding surface and a slider part facing surface facing the base part facing surface in close proximity. The slider part is slidable in the vertical direction relative to the slide base part. The first lead wire passage groove may be formed on the base part facing surface.

Even more specifically, the lead wire passage may have a second lead wire passage groove formed on the slider part facing surface to allow the lead wire extending from the motor to run therethrough in the vertical direction. The second lead wire passage groove is communicated with the first lead wire passage groove provided on the base part facing surface.

Preferably, the slider part may have a protruding lid formed at an upper end thereof so that the lid projects into the first lead wire passage groove of the slide base part to cover from above the first lead wire passage groove.

With the above-described structure, it becomes difficult for water or dust to enter the lead wire passage.

Specifically, the arrangement may be as follows. The body unit has a lead wire housing container. The lead wire housing container has an interior space constituting the lead wire housing part.

Preferably, the lead wire housing container may have two side surfaces disposed adjacently to the opposite sides, respectively, of the lead wire.

With the above-described structure, lateral movement of the curved portion of the lead wire when the drilling drive unit vertically moves is restricted by the two side surfaces. Therefore, the position of the curved portion of the lead wire changes stably, and the configuration of the curved portion is stabilized.

Preferably, the arrangement may be as follows. The holding part comprises a bushing fitting opening formed in the top of the lead wire housing container, and a bushing fitted to the bushing fitting opening. The lead wire is held by being passed through the bushing.

More preferably, the arrangement may be as follows. The bushing has on the outer peripheral surface thereof an annular fitting groove engageable with the bushing fitting opening. The fitting groove has a bottom with an outer diameter smaller than the inner diameter of the bushing fitting opening, so that a gap is formed between the bottom of the fitting groove and the bushing fitting opening, thereby allowing the bushing to tilt relative to the lead wire housing container.

With the above-described structure, the bushing is tilted by force applied from the lead wire, thereby allowing the change in curvature of the curved portion of the lead wire to be kept within a further reduced range. Therefore, the load on the lead wire can be further reduced.

An embodiment of the drilling machine according to the present invention will be explained below on the basis of the accompanying drawings.

### Brief Description of Drawings:

Fig. 1 is a partly-sectioned side view of a drilling machine according to an embodiment of the present invention, showing a state where a drilling drive unit has moved up to the top dead center position.
Fig. 2 is a partly-sectioned side view of the drilling machine shown in Fig. 1, showing a state where the drilling drive unit has moved down to the bottom dead center position.
Fig. 3 is a top view of the drilling machine shown in Fig. 1.
Fig. 4 is an exploded perspective view of the drilling machine shown in Fig. 1, showing a state where the body unit and the drilling drive unit are disassembled from each other.
Fig. 5 is an exploded perspective view of the drilling machine, with a body cover removed therefrom, as seen from a different angle from that of Fig. 4.
Fig. 6 is an exploded perspective view of the body unit.
Fig. 7 is a fragmentary enlarged view of a holding part.
Fig. 8 is a fragmentary enlarged view of the holding part shown in Fig. 7, showing a state where a bushing is tilted leftward.
Fig. 9 is a fragmentary enlarged view of the holding part shown in Fig. 8, showing a state where the bushing is tilted rightward.

### Description of Embodiments:

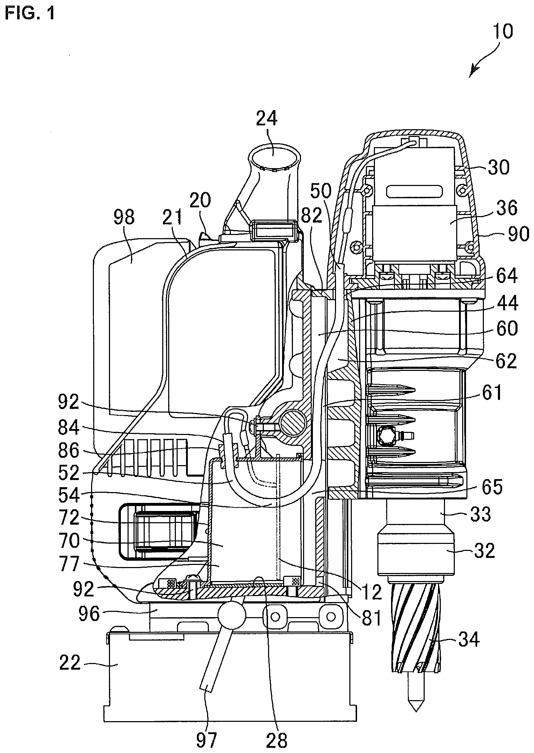

A drilling machine 10 according to an embodiment of the present invention has, as shown in Fig. 1, a body unit 20 having a drive control circuit 12 in its interior covered with a body cover 21, and a drilling drive unit 30 vertically movable relative to the body unit 20. A magnet 22 is provided underneath the body unit 20 to allow the drilling machine 10 to be secured to a member made of a magnetic material, e.g. iron, by magnetically adhering thereto. A positioning mechanism 96 is provided between the magnet 22 and the body unit 20 to allow the position of the body unit 20 to be adjusted both longitudinally and laterally relative to the magnet 22 by turning a positioning handle 97 detachably attached to the positioning mechanism 96. In addition, a grip 24 is provided on the top of the body unit 20 to make it easy to carry the drilling machine 10. The drilling drive unit 30 is provided at the bottom thereof with a drilling tool fitting part 32 connected to an arbor 33. The drilling tool fitting part 32 is fitted with a drilling tool 34 such as a drill or an annular cutter. The arbor 33 is connected through a speed reducer (not shown) to a motor 36 provided in a motor cover 90 at the top of the drilling drive unit 30. The motor 36 rotationally drives the drilling tool 34. A lead wire 50 for transmitting electric power and control signals from the body unit 20 to the motor 36 is routed, as will be detailed later, as follows. The lead wire 50 is led out from the motor 36 in the motor cover 90 and extends downward into a lead wire housing part 70 in the body unit 20 through a lead wire passage 60 formed between the body unit 20 and the drilling drive unit 30. In the lead wire housing part 70, the lead wire 50 is curved and directed upward to lead to the drive control circuit 12, with an upwardly directed portion 52 of the lead wire 50 held by a holding part 84, which comprises a bushing 86. The body unit 20 is equipped with a battery 98. The electric power of the battery 98 is supplied to the motor 36 through the lead wire 50 under control by the drive control circuit 12.

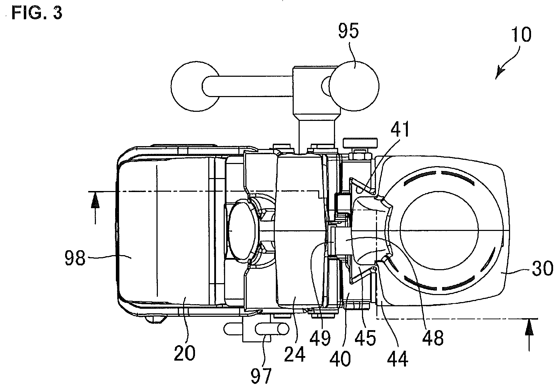

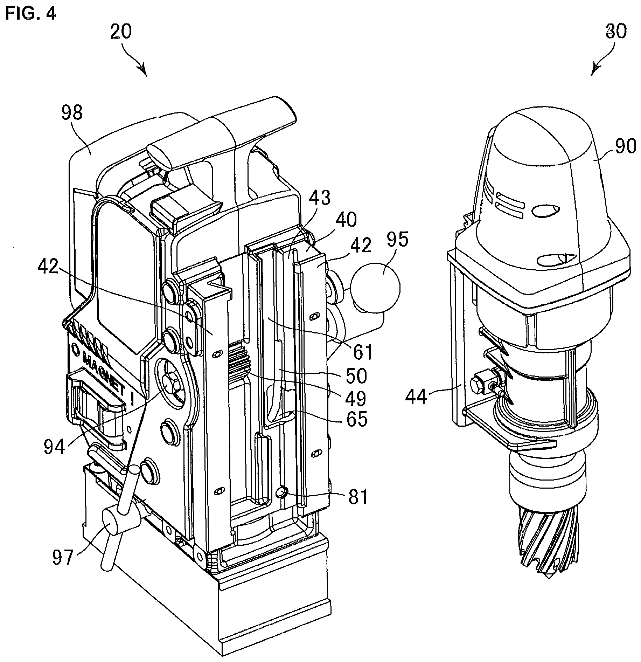

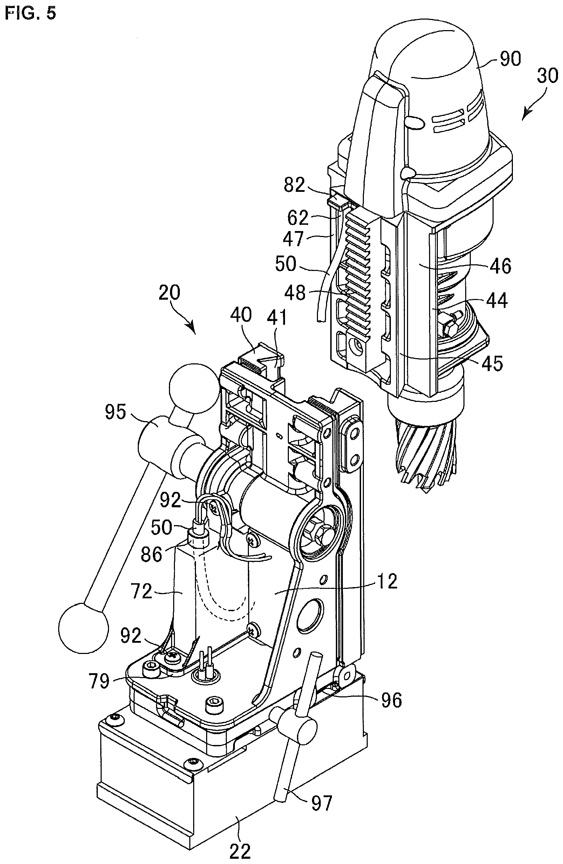

As shown in Figs. 3 and 4, the body unit 20 has a slide base part 40 secured thereto. The slide base part 40 has a dovetail groove 41 formed therein. As shown in Figs. 3 and 5, the drilling drive unit 30 has a slider part 44 secured thereto. The slider part 44 has a slide rail 45 shaped to correspond to the dovetail groove 41 of the slide base part 40. The body unit 20 and the drilling drive unit 30 are vertically slidably connected to each other through slidable engagement between a base part sliding surface 42 (Fig. 4) of the slide base part 40 and a slider part sliding surface 46 (Fig. 5). The dovetail groove 41 of the slide base part 40 is provided with a base part facing surface 43 (Fig. 4), and the slide rail 45 of the slider part 44 is provided with a slider part facing surface 47 (Fig. 5). When the body unit 20 and the drilling drive unit 30 are connected to each other, the base part facing surface 43 and the slider part facing surface 47 face each other in close proximity, and a rack 48 (Fig. 5) provided on the drilling drive unit 30 and a pinion 49 (Fig. 4) provided on the body unit 20 meshingly engage each other. The pinion 49 is rotated by turning a feed handle 95 detachably attached to a handle mounting part 94 of the body unit 20, and this causes the drilling drive unit 30 to move vertically relative to the body unit 20. It should be noted that the handle mounting part 94 is provided on each lateral side of the body unit 20, so that the feed handle 95 can be attached to either of the handle mounting parts 94.

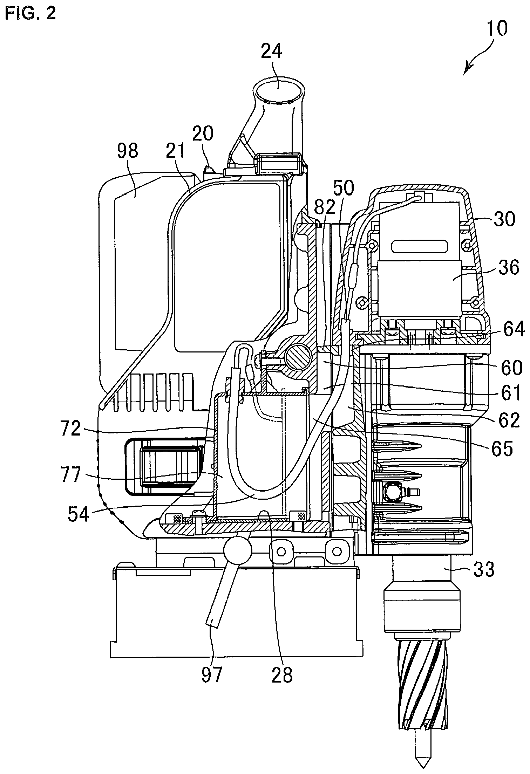

As will be clear from Fig. 4, the base part facing surface 43 of the slide base part 40 is formed with a first lead wire passage groove 61 vertically extending from the upper end to the middle of the base part facing surface 43. As will be clear from Fig. 5, the slider part facing surface 47 of the slider part 44 is formed with a second lead wire passage groove 62 extending in the vertical direction. When the body unit 20 and the drilling drive unit 30 are connected to each other, as shown in Figs. 1 and 2, the first lead wire passage groove 61 communicates with the second lead wire passage groove 62 at at least a part thereof to form a vertically extending lead wire passage 60 as a whole. The upper end of the second lead wire passage groove 62 is provided with an opening 64 communicating with the interior of the motor cover 90, which covers the motor 36, so that the lead wire 50 led out from the motor 36 extends into the lead wire passage 60 through the opening 64. The lower end of the first lead wire passage groove 61 is formed with a body opening 65 communicating with the lead wire housing part 70 in the body unit 20, so that the lead wire 50 extending through the lead wire passage 60 further extends downward into the lead wire housing part 70 through the body opening 65. It should be noted that the rack 48 provided on the drilling drive unit 30 and the pinion 49 provided on the body unit 20 are disposed at positions displaced from the centers of the slide rail 45 and the dovetail groove 41 toward this side as viewed in Figs. 4 and 5, thereby ensuring spaces for forming the first and second lead wire passage grooves 61 and 62.

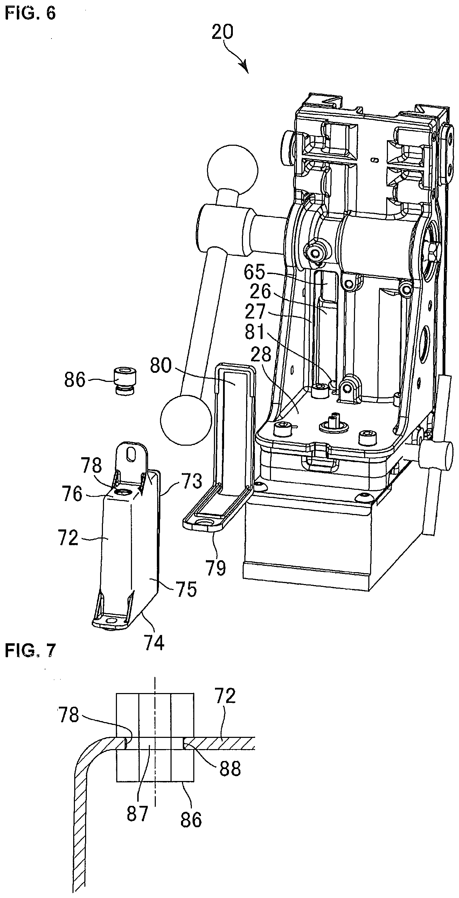

The body unit 20 is provided therein with a lead wire housing container 72, as shown in Figs. 5 and 6, having a generally rectangular parallelepiped configuration and open at the front 73 and bottom 74 thereof. The lead wire housing container 72 is secured to the body unit 20 with a screw 92 through an L-shaped seal member 79 so that the lead wire housing container 72 sealingly engages both a seal surface 27 of a front inner surface 26 of the body unit 20 and a lower inner surface 28 thereof. The open front 73 of the lead wire housing container 72 communicates with the body opening 65 (Figs. 1, 4 and 6) through an opening 80 of the seal member 79 to allow the lead wire 50 running through the lead wire passage 60 to be housed in the lead wire housing part 70 defined by an interior space 77 of the lead wire housing container 72. The top 76 of the lead wire housing container 72 is provided with a bushing fitting opening 78, and a bushing 86 functioning as a holding part 84 holding the lead wire 50 is fitted into the bushing fitting opening 78. The front inner surface 26 of the body unit 20 has a drain port 81 (Figs. 1, 4 and 6) provided at a position corresponding to the lower end of the front of the lead wire housing container 72. The drain port 81 extends through the front inner surface 26 of the body unit 20 to the outside to allow water entering the lead wire housing container 72 to be discharged to the outside.

As shown in Fig. 1, the lead wire 50 is routed as follows. The lead wire 50 extending downward from the lead wire passage 60 into the lead wire housing part 70 is curved relatively gently so as to be directed upward in the lead wire housing part 70. An upwardly directed portion 52 of the lead wire 50 is held by the bushing 86, and the leading end of the lead wire 50 extending beyond the portion 52 held by the bushing 86 further extends to the drive control circuit 12.

When the drilling drive unit 30 has moved up to the top dead center position, as shown in Fig. 1, the lead wire 50 led out from the motor 36 extends downward through the second lead wire passage groove 62 and the first lead wire passage groove 61 to enter the lead wire housing part 70 through the body opening 65. Further, the lead wire 50 is curved gently in an upper end portion of the lead wire housing part 70 to extend to the bushing 86. As the drilling drive unit 30 is moved from this position toward the bottom dead center position shown in Fig. 2 by turning the feed handle 95, the second lead wire passage groove 62 moves downward relative to the first lead wire passage groove 61. During the downward movement of the drilling drive unit 30, the lead wire 50 does not change its position relative to the second lead wire passage groove 62, but moves downward relative to the first lead wire passage groove 61, together with the drilling drive unit 30, while being paid out into the lead wire housing part 70. Consequently, the position of the curved portion 54 gradually moves downward and eventually reaches a lower end portion of the lead wire housing part 70, as shown in Fig. 2. Even at this time, the curved portion 54 does not contact a lower inner surface 28 constituting the lead wire housing part 70 but still maintains the gently curved configuration. Next, when the drilling drive unit 30 is moved upward from the bottom dead center position toward the top dead center position, the second lead wire passage groove 62 moves upward relative to the first lead wire passage groove 61, and as the drilling drive unit 30 moves upward, the lead wire 50 is paid out upward from the lead wire housing part 70 into the first lead wire passage groove 61, and the position of the curved portion 54 moves upward again in the lead wire housing part 70. The lead wire housing part 70 is configured to be sufficiently large to allow the curved portion 54 of the lead wire 50 to move as stated above without interference. The width between two side surfaces 75 of the lead wire housing container 72 is set slightly greater than the width of the lead wire 50 so that the lead wire 50 is in close proximity to the side surfaces 75, thereby restricting the lead wire 50 from bending laterally. Thus, when the drilling drive unit 30 moves up and down, the position of the curved portion 54 of the lead wire 50 always moves stably, and the configuration of the curved portion 54 is stabilized. The slider part 44 of the drilling drive unit 30 has a protruding lid 82 (Fig. 5) formed at the upper end thereof so that the lid 82 extends into the first lead wire passage groove 61 of the slide base part 40. The lid 82 covers from above an area of the first lead wire passage groove 61 where the lead wire 50 runs, no matter where the drilling drive unit 30 is positioned relative to the body unit 20. This structure prevents water or dust from entering into the body unit 20 through the lead wire passage 60.

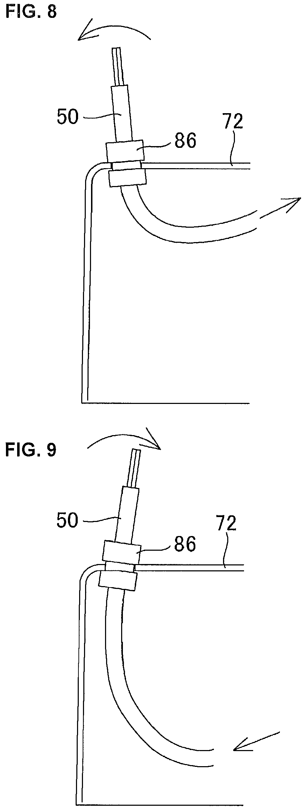

The bushing 86, which holds the lead wire 50 from moving in the longitudinal direction thereof, has, as shown in Fig. 7, an annular fitting groove 87 on the outer peripheral surface thereof. The fitting groove 87 is fitted to the bushing fitting opening 78 of the lead wire housing container 72, thereby allowing the bushing 86 to be secured to the lead wire housing container 72. The outer diameter of the bottom 88 of the fitting groove 87 is smaller than the inner diameter of the bushing fitting opening 78, so that a gap is formed between the fitting groove 87 and the bushing fitting opening 78, thereby allowing the bushing 86 to tilt within a predetermined range relative to the lead wire housing container 72. When the drilling drive unit 30 is in the top dead center position, the bushing 86 is subjected to a counterclockwise moment from the lead wire 50. However, the gap formed between the fitting groove 87 and the bushing fitting opening 78 allows the bushing 86 to slightly tilt leftward, as shown in Fig. 8. When the drilling drive unit 30 is in the bottom dead center position, as shown in Fig. 9, the bushing 86 is subjected to a clockwise moment from the lead wire 50 and therefore slightly tilts rightward. Thus, the bushing 86 tilts according to the curved condition of the lead wire, thereby allowing the curved portion 54 of the lead wire 50 to be kept in a state where the curvature of the curved portion 54 is large. It is therefore possible to reduce the load on the lead wire 50.

As has been stated above, the drilling machine 10 according to this embodiment is configured so that the lead wire 50 is not exposed to the outside throughout the route from the motor 36 to the drive control circuit 12. Therefore, there is no danger of the lead wire 50 being disconnected by being accidentally caught in the drilling machine 10. In addition, the lead wire 50 is routed between the body unit 20 and the drilling drive unit 30 so that the lead wire 50 has almost no deformation due to the vertical movement of the drilling drive unit 30 at a portion thereof extending from the motor 36 to the lead wire housing part 70 in the body unit 20. Further, the drilling machine 10 is configured to absorb a change in the distance between the motor 36 and the drive control circuit 12 due to the vertical movement of the drilling drive unit 30 in the lead wire housing part 70 inside the body unit 20, where some space is available for the lead wire 50, while allowing the lead wire 50 to maintain a relatively gently curved configuration. Accordingly, the load on the lead wire 50 is reduced, and the possibility of disconnection of the lead wire can be reduced considerably.

It should be noted that although in this embodiment the lead wire passage 60 comprises the first and second lead wire passage grooves 61 and 62, the lead wire passage 60 may comprise only the first lead wire passage groove 61, which is formed on the body unit 20. In addition, although a gap is formed between the fitting groove 87 of the bushing 86 and the bushing fitting opening 78 to make the bushing 86 tiltable, the fitting groove 87 and the bushing fitting opening 78 may be brought into close contact with each other without a gap therebetween for the purpose of improving sealability. Further, although in this embodiment the battery 98 is used as a drive source, an alternating current power source may be used as a drive source.

**List of Reference Signs:**

| | |
|---|---|
| 10: drilling machine | 12: drive control circuit |
| 20: body unit | 21: body cover |
| 22: magnet | 24: grip |
| 26: front inner surface | 27: seal surface |
| 28: lower inner surface | 30: drilling drive unit |
| 32: drilling tool fitting part | 33: arbor |
| 34: drilling tool | 36: motor |
| 40: slide base part | 41: dovetail groove |
| 42: base part sliding surface | 43: base part facing surface |
| 44: slider part | 45: slide rail |
| 46: slider part sliding surface | 47: slider part facing surface |
| 48: rack | 49: pinion |
| 50: lead wire | 52: upwardly directed portion |
| 54: curved portion | 60: lead wire passage |
| 61: first lead wire passage groove | 62: second lead wire passage groove |
| 64: opening | 65: body opening |
| 70: lead wire housing part | 72: lead wire housing container |
| 73: front | 74: bottom |
| 75: side surface | 76: top |
| 77: interior space | 78: bushing fitting opening |
| 79: seal member | 80: opening |
| 81: drain port | 82: protruding lid |
| 84: holding part | 86: bushing |
| 87: fitting groove | 88: bottom |
| 90: motor cover | 92: screw |
| 94: handle mounting part | 95: feed handle |
| 96: positioning mechanism | 97: positioning handle |
| 98: battery | |

## Claims

1. A drilling machine (10) comprising:
a body unit (20) having a drive control circuit (12) therein;
a drilling drive unit (30) having a motor (36) for rotationally driving a drilling tool (14), the drilling drive unit (30) being vertically movably attached to the body unit (20); and
a lead wire (50) extending from the motor (36) to the drive control circuit (12);
wherein a lead wire passage (60) is formed between the body unit (20) and the drilling drive unit (30) to allow the lead wire (50) to run therethrough in a vertical direction;
the body unit (20) having a lead wire housing part (70) communicating with the lead wire passage (60), and a holding part (84) holding a part of the lead wire (50) in the body unit (20), the lead wire housing part (70) being inside the body unit (20);
the lead wire (50) being routed to extend from the motor (36) downward into the lead wire housing part (70) through the lead wire passage (60) and curved and directed upward in the lead wire housing part (70) to lead to the drive control circuit (12), with an upwardly directed portion of the lead wire (50) held by the holding part (84);
wherein, when the drilling drive unit (30) moves upward relative to the body unit (20), a part of the lead wire (50) is paid out upward from the lead wire housing part (70) into the lead wire passage (60), and the curved portion (54) of the lead wire (50) moves upward in the lead wire housing part (70), whereas, when the drilling drive unit (30) moves downward relative to the body unit (20), a part of the lead wire (50) is paid out downward from the lead wire passage (60) into the lead wire housing part (70), and the curved portion (54) moves downward in the lead wire housing part (70).

2. The drilling machine (10) of claim 1, wherein the lead wire passage (60) has a first lead wire passage groove (61) formed on a surface of the body unit (20) facing the drilling drive unit (30), the first lead wire passage groove (61) extending in the vertical direction and allowing the lead wire (50) to extend downward into the lead wire housing part (70).

3. The drilling machine (10) of claim 2, further comprising:
a slide base part (40) secured to the body unit (20) and having a base part sliding surface (42) and a base part facing surface (43); and
a slider part (44) secured to the drilling drive unit (30) and having a slider part sliding surface (46) slidable relative to the base part sliding surface (42) and a slider part facing surface (47) facing the base part facing surface (43) in close proximity, the slider part (44) being slidable in the vertical direction relative to the slide base part (40);
wherein the first lead wire passage groove (61) is formed on the base part facing surface (43) passage.

4. The drilling machine (10) of claim 3, wherein the lead wire passage (60) has a second lead wire passage groove (62) formed on the slider part facing surface (47) to allow the lead wire (50) extending from the motor (36) to run therethrough in the vertical direction, the second lead wire passage groove (62) being communicated with the first lead wire passage groove (61) provided on the base part facing surface (43).

5. The drilling machine (10) of claim 4, wherein the slider part (44) has a protruding lid (82) formed at an upper end thereof so that the lid (82) projects into the first lead wire passage groove (61) of the slide base part (40) to cover from above the first lead wire passage groove (61).

6. The drilling machine (10) of claim 1, wherein the body unit (20) has a lead wire housing container (72), the lead wire housing container (72) having an interior space constituting the lead wire housing part (70).

7. The drilling machine (10) of claim 6, wherein the lead wire housing container (72) has two side walls disposed adjacently to opposite sides, respectively, of the lead wire (50).

8. The drilling machine (10) of claim 6, wherein the holding part (84) comprises a bushing fitting opening (78) formed in a top of the lead wire housing container (72), and a bushing (86) fitted to the bushing fitting opening (78);
the lead wire (50) being held by being passed through the bushing (86).

9. The drilling machine (10) of claim 8, wherein the bushing (86) has on an outer peripheral surface thereof an annular fitting groove (87) engageable with the bushing fitting opening (78), the fitting groove (87) having a bottom with an outer diameter smaller than an inner diameter of the bushing fitting opening (78), so that a gap is formed between the bottom of the fitting groove (87) and the bushing fitting opening (78), thereby allowing the bushing (86) to tilt relative to the lead wire housing container (72).

## Patentansprüche

1. Bohrmaschine (10), aufweisend:
eine Körpereinheit (20) mit darin einer Antriebssteuerschaltung (12),
eine Bohrantriebseinheit (30), die einen Motor (36) für das drehende Antreiben eines Bohrwerkzeugs (14) aufweist, wobei die Bohrantriebseinheit (30) vertikal beweglich an der Körpereinheit (20) befestigt ist, und
einen Anschlussdraht (50), der sich von dem Motor (36) zu der Antriebssteuereinheit (12) erstreckt,
wobei ein Anschlussdrahtdurchgang (60) zwischen der Körpereinheit (20) und der Bohrantriebseinheit (30) ausgebildet ist, um zu gestatten, dass der Anschlussdraht (50) durch diesen in einer vertikalen Richtung verläuft,
wobei die Körpereinheit (20) einen Anschlussdraht-Aufnahmeteil (70), der mit dem Anschlussdrahtdurchgang (60) verbunden ist, und einen Halteteil (84) zum Halten eines Teils des Anschlussdrahts (50) in der Körpereinheit (20) aufweist, wobei sich der Anschlussdraht-Aufnahmeteil (70) innerhalb der Körpereinheit (20) befindet,
wobei der Anschlussdraht (50) geführt ist, um sich von dem Motor (36) nach unten in den Anschlussdraht-Aufnahmeteil (70) durch den Anschlussdrahtdurchgang (60) zu erstrecken, und in dem Anschlussdraht-Aufnahmeteil (70) nach oben gekrümmt und gerichtet ist, um zu der Antriebssteuerschaltung (12) geführt zu werden, wobei ein nach oben gerichteter Teil des Anschlussdrahts (50) durch den Halteteil (84) gehalten wird,
wobei, wenn sich die Bohrantriebseinheit (30) nach oben relativ zu der Körpereinheit (20) bewegt, ein Teil des Anschlussdrahts (50) nach oben von dem Anschlussdraht-Aufnahmeteil (70) in den Anschlussdrahtdurchgang (60) ausgegeben wird und sich der gekrümmte Teil (54) des Anschlussdrahts (50) nach oben in dem Anschlussdraht-Aufnahmeteil (70) bewegt, und wobei, wenn sich die Bohrantriebseinheit (30) nach unten relativ zu der Körpereinheit (20) bewegt, ein Teil des Anschlussdrahts (50) nach unten von dem Anschlussdrahtdurchgang (60) in den Anschlussdraht-Aufnahmeteil (70) ausgegeben wird, und sich der gekrümmte Teil (54) nach unten in den Anschlussdraht-Aufnahmeteil (70) bewegt.

2. Bohrmaschine (10) nach Anspruch 1, wobei der Anschlussdrahtdurchgang (60) eine erste Anschlussdraht-Durchgangsnut (61) aufweist, die an einer der Bohrantriebseinheit (30) zugewandten Fläche der Körpereinheit (20) ausgebildet ist, wobei sich die erste Anschlussdraht-Durchgangsnut (61) in der vertikalen Richtung erstreckt und gestattet, dass sich der Anschlussdraht (50) nach unten in den Anschlussdraht-Aufnahmeteil (70) erstreckt.

3. Bohrmaschine (10) nach Anspruch 2, die weiterhin aufweist:
einen Gleitbasisteil (40), der an der Körpereinheit (20) befestigt ist und eine Basisteil-Gleitfläche (42) und eine Basisteil-Zuwendungsfläche (43) aufweist, und
einen Gleiterteil (44), der an der Bohrantriebseinheit (30) befestigt ist und eine Gleiterteil-Gleitfläche (46), die relativ zu der Basisteil-Gleitfläche (42) gleiten kann, und eine Gleiterteil-Zuwendungsfläche (47), die der Basisteil-Zuwendungsfläche (43) in nächster Nähe zugewandt ist, aufweist, wobei der Gleiterteil (44) in der vertikalen Richtung relativ zu dem Gleitbasisteil (40) gleiten kann,
wobei die erste Anschlussdraht-Durchgangsnut (61) auf der Basisteil-Zuwendungsfläche (43) ausgebildet ist.

4. Bohrmaschine (10) nach Anspruch 3, wobei der Anschlussdrahtdurchgang (60) eine zweite Anschlussdraht-Durchgangsnut (62) aufweist, die an der Gleiterteil-Zuwendungsfläche (47) ausgebildet ist, um zu gestatten, dass der von dem Motor (36) erstreckende Anschlussdraht (50) durch diesen in der vertikalen Richtung verläuft, wobei die zweite Anschlussdraht-Durchgangsnut (62) mit der ersten Anschlussdraht-Durchgangsnut (61) verbunden ist, die an der Basisteil-Zuwendungsfläche (43) vorgesehen ist.

5. Bohrmaschine (10) nach Anspruch 4, wobei der Gleiterteil (44) eine vorstehende Abdeckung (82) aufweist, die an einem oberen Ende derart ausgebildet ist, dass die Abdeckung (82) in die erste Anschlussdraht-Durchgangsnut (61) des Gleitbasisteils (40) vorsteht, um die erste Anschlussdraht-Durchgangsnut (61) von oben abzudecken.

6. Bohrmaschine (10) nach Anspruch 1, wobei die Körpereinheit (20) einen Anschlussdraht-Aufnahmebehälter (72) aufweist, wobei der Anschlussdraht-Aufnahmebehälter (72) einen den Anschlussdraht-Aufnahmeteil (70) bildenden Innenraum aufweist.

7. Bohrmaschine (10) nach Anspruch 6, wobei der Anschlussdraht-Aufnahmebehälter (72) zwei Seitenwände aufweist, die in Nachbarschaft zu jeweils gegenüberliegenden Seiten des Anschlussdrahts (50) angeordnet sind.

8. Bohrmaschine (10) nach Anspruch 6, wobei der Halteteil (84) eine Hülsenpassöffnung (78), die an einem oberen Ende des Anschlussdraht-Aufnahmebehälters (72) ausgebindet ist, und eine in die Hülsenpassöffnung (78) gepasste Hülse (86) aufweist,
wobei der Anschlussdraht (50) gehalten wird, indem er durch die Hülse (86) geführt wird.

9. Bohrmaschine (10) nach Anspruch 8, wobei die Hülse (86) an einer Außenumfangsfläche eine ringförmige Passnut (87) aufweist, die in einen Eingriff mit der Hülsenpassöffnung (78) gebracht werden kann, wobei die Passnut (87) einen Boden mit einem Außendurchmesser aufweist, der kleiner als ein Innendurchmesser der Hülsenpassöffnung (78) ist, sodass ein Zwischenraum zwischen dem Boden der Passnut (87) und der Hülsenpassöffnung (78) gebildet wird, um zu gestatten, dass sich die Hülse (86) relativ zu dem Anschlussdraht-Aufnahmebehälter (72) neigt.

## Revendications

1. Perceuse (10) comprenant :
un corps (20) comportant un circuit de commande d'entraînement (12) ;
un module d'entraînement de perceuse (30) comportant un moteur (36) pour entraîner en rotation un outil de perçage (14), le module d'entraînement de perceuse (30) étant fixé au corps de façon mobile verticalement (20) ; et
un fil conducteur (50) s'étendant du moteur (36) jusqu'au circuit de commande d'entraînement (12) ;
dans laquelle un passage de fil conducteur (60) est formé entre le corps (20) et le module d'entraînement de perceuse (30) pour permettre au fil conducteur (50) de courir dans celui-ci dans une direction verticale ;
le corps (20) comportant une partie de logement de fil conducteur (70) communiquant avec le passage de fil conducteur (60), et une partie de maintien (84) maintenant une partie du til conducteur (50) dans le corps (20), la partie de logement de fil conducteur (70) étant à l'intérieur du corps (20) ;
le fil conducteur (50) étant routé de manière à s'étendre à partir du moteur (36) vers le bas dans la partie de logement de fil conducteur (70) à travers le passage de fil conducteur (60), et courbé et dirigé vers le haut dans la partie de logement de fil conducteur (70) pour aller jusqu'au circuit de commande d'entraînement (12), avec une portion du fil conducteur dirigée vers le haut (50) maintenue par la partie de maintien (84) ;
dans laquelle, lorsque le module d'entraînement de perceuse (30) se déplace vers le haut par rapport au corps (20), une partie du fil conducteur (50) est distribuée vers le haut à partir de la partie de logement de fil conducteur (70) dans le passage de fil conducteur (60), et la portion courbée (54) du fil conducteur (50) se déplace vers le haut dans la partie de logement de fil conducteur (70), tandis que, lorsque le module d'entraînement de perceuse (30) se déplace vers le bas par rapport au corps (20), une partie du fil conducteur (50) est distribuée vers le bas à partir du passage de fil conducteur (60) dans la partie de logement de fil conducteur (70), et la portion courbée (54) se déplace vers le bas dans la partie de logement de fil conducteur (70).

2. Perceuse (10) selon la revendication 1, dans laquelle le passage de fil conducteur (60) comporte une première gorge de passage de fil conducteur (61) formée sur une surface du corps (20) en face du module d'entraînement de perceuse (30), la première gorge de passage de fil conducteur (61) s'étendant dans la direction verticale et laissant le fil conducteur (50) s'étendre vers le bas dans la partie de logement de fil conducteur (70).

3. Perceuse (10) selon la revendication 2, comprenant en outré :
une partie de base coulissante (40) fixée au corps (20) et comportant une surface de glissement de partie de base (42) et une surface opposée de partie de base (43) ; et
une partie de coulisseau (44) fixée au module d'entraînement de perceuse (30) et comportant une surface de glissement de partie de coulisseau (46) pouvant coulisser par rapport à la surface de glissement de partie de base (42) et une surface opposée de partie de coulisseau (47) opposée à la surface opposée de partie de base (43) dans une proximité rapprochée, la partie de coulisseau (44) pouvant coulisser dans la direction verticale par rapport à la partie de base coulissante (40) ;
dans laquelle la première gorge de passage de fil conducteur (61) est formée sur le passage de la surface opposée de partie de base (43).

4. Perceuse (10) selon la revendication 3, dans laquelle le passage de fil conducteur (60) comporte une deuxième gorge de passage de fil conducteur (62) formée sur la surface opposée de partie de coulisseau (47) pour permettre au fil conducteur (50) s'étendant à partir du moteur (36) de courir dedans dans la direction verticale, la deuxième gorge de passage de fil conducteur (62) étant en communication avec la première gorge de passage de fil conducteur (61) prévue sur la surface opposée de partie de base (43).

5. Perceuse (10) selon la revendication 4, dans laquelle la partie de coulisseau (44) comporte un couvercle saillant (82) formé au niveau d'une extrémité supérieure de sorte que le couvercle (82) fait saillie dans la première gorge de passage de fil conducteur (61) de la partie de base coulissante (40) pour couvrir par le dessus la première gorge de passage de fil conducteur (61).

6. Perceuse (10) selon la revendication 1, dans laquelle le corps (20) comporte un conteneur de logement de fil conducteur (72), le conteneur de logement de fil conducteur (72) ayant un espace intérieur constituant la partie de logement de fil conducteur (70).

7. Perceuse (10) selon la revendication 6, dans laquelle le conteneur de logement de fil conducteur (72) comporte deux parois latérales disposées de façon adjacente à des côtés opposés, respectivement, du fil conducteur (50).

8. Perceuse (10) selon la revendication 6, dans laquelle la partie de maintien (84) comprend une ouverture de montage de bague (78) formée sur le dessus du conteneur de logement de fil conducteur (72), et une bague (86) montée dans l'ouverture de montage de bague (78) ;
le fil conducteur (50) étant maintenu en étant passé à travers la bague (86).

9. Perceuse (10) selon la revendication 8, dans laquelle la bague (86) comporte sur une surface périphérique extérieure une gorge de montage annulaire (87) pouvant se mettre en prise avec l'ouverture de montage de bague (78), la gorge de montage (87) ayant un fond ayant un diamètre extérieur plus petit qu'un diamètre intérieur de l'ouverture de montage de bague (78), de sorte qu'un intervalle est formé entre le fond de la gorge de montage (87) et l'ouverture de montage de bague (78), permettant par cela à la bague (86) de s'incliner par rapport au conteneur de logement de fil conducteur (72).
